# EUROPEAN PATENT SPECIFICATION

(11) **EP 1 046 670 B1**
(45) Date of publication and mention of the grant of the patent: **09.07.2003**
(21) Application number: 00850071.2
(22) Date of filing: 20.04.2000
(51) Int. Cl.: C08K 5/34, C08L 33/04, C09D 133/04

(54) **Ultraviolet absorptive resin composition**
UV-absorbierende Harzzusammensetzung
Composition de résine absorbante de rayonnement UV

(30) Priority: 23.04.1999 JP 11698999
(43) Date of publication of application: 25.10.2000
(73) Proprietor: Nippon Mitsubishi Oil Corporation, Minato-ku, Tokyo 105-8412 (JP)
(72) Inventor: Sasaki, Makoto, c/o Nippon Mitsubishi Oil Corp., Yokohama-shi, Kanagawa-ken 231-0815 (JP); Ishii, Takafumi, c/o Nippon Mitsubishi Oil Corp., Yokohama-shi, Kanagawa-ken 231-0815 (JP); Yuasa, Hitoshi, c/o Nippon Mitsubishi Oil Corp., Yokohama-shi, Kanagawa-ken 231-0815 (JP)
(74) Representative: Modin, Jan

(56) References cited:
- EP-A- 0 604 980
- GB-A- 2 319 035
- US-A- 4 451 597
- US-A- 5 554 760
- "GEMEINSAMER EINSATZ VON UV-ABSORBERN UND PHOTOH{RTERN IN BESCHICHTUNGEN" RESEARCH DISCLOSURE,GB,INDUSTRIAL OPPORTUNITIES LTD. HAVANT, no. 359, 1 March 1994 (1994-03-01), pages 117-118, XP000439947 ISSN: 0374-4353

## Description

This invention relates to a novel resin composition having an ultraviolet absorbing ability.

A method or technique has been employed for a long time in which a composition containing an ultraviolet absorptive agent is applied over a surface of a glass or other material for the purpose of shielding ultraviolet lights or preventing the same from fading or deteriorating the glass or materials. Most of the conventional compositions to be used for such purposes are blend products of an ultraviolet absorber and a matrix polymer. Usually, a compound having a benzotriazole or hydroxybenzophenone skeleton is used as an ultraviolet absorber and an acrylic synthetic resin is used as a matrix polymer. However, when this type of composition is used as a coating, it needs to be dissolved in an organic solvent due to low solubility in water. Therefore, there may arise a problem involving safety in handling and environmental pollution. Furthermore, compositions of blend type may result in the film formation which lacks strength and durability. This is because mixing a matrix polymer, even though it has excellent strength and durability, with an ultraviolet absorptive agent will reduce the strength and durability of the resulting film. When a hard polymer is use as a matrix to compensate such reduction, there arises a problem that the film becomes brittle.

Although it is not absolutely impossible to obtain an ultraviolet absorptive composition which is highly soluble in water, such a composition can not be expected to have a sufficient ultraviolet absorptivity.

Furthermore, although it is also not impossible to maintain both ultraviolet absorptivity and solubility in water by copolymerizing a polymeric compound having a benzotriazole or hydroxybenzophenone skeleton contributive to ultraviolet absorptivity with a monomer giving a water-soluble polymer, the resulting copolymer is necessarily expensive and as a matter of course is restricted in its industrial application.

It is an object of the present invention to provide an ultraviolet absorptive resin composition which is high in ultraviolet absorptivity and can be used for the preparation of a water-based coating as well as being capable of forming a film having sufficient strength and durability.

### BRIEF SUMMARY OF THE INVENTION

After an extensive research on combinations of various materials, it has now been discovered that the problems of the prior art can be solved all at once by blending a specific acrylic compound and a specific melamine compound and an ultraviolet absorptive agent having a specific structure at a predetermined blend ratio.

According to the present invention, there is provided an ultraviolet absorptive resin composition which is obtained by blending 100 weight part of an acrylic copolymer having an acid value of 20 to 200 KOHmg/g and a weight-average molecular weight of 4,000 to 200,000, 30 to 80 weight part of a melamine compound and 3 to 15 weight part of a compound represented by the formula 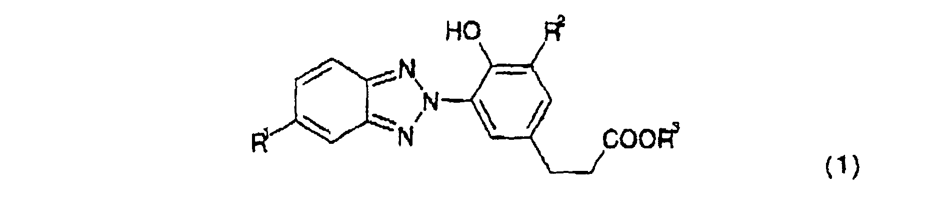 wherein R¹ is hydrogen or chlorine, R² is a C₁ - C₅ alkyl group and R³ is a C₁ - C₁₂ alkyl group.

### DETAILED DESCRIPTION OF THE INVENTION

An acrylic copolymer to be used for the present invention has an acid value of 20 to 200 KOHmg/g, preferably 40 to 100 KOHmg/g. An acid value of less than 20 KOHmg/g would lead to reduced solubility in a water-containing solvent, while that exceeding 200 KOHmg/g would lead to reduced water-resistance of the film of a composition obtained by blending the copolymer with a melamine compound and an ultraviolet absorber. The term "acid value" used herein denotes the amount in milligram of potassium hydroxide required to neutralize 1 gram of an acrylic copolymer.

Furthermore, the acrylic copotymer has a weight-average molecular weight of 4,000 to 200,000. The upper limit of weight-average molecular weight is 200,000, preferably 6 0 ,000, more preferably 50,000 and further more preferably 30,000, and the lower limit is 6,000 and more preferably 8,000.

A weight-average molecular weight of less than 4000 would cause reduced hardness and durability of the film of a composition obtained by blending the copolymer with a melamine compound and an ultraviolet absorber, while that exceeding 200,000 would lead to excessively increased viscosity of a composition obtained by blending the copolymer with a melamine compound and an ultraviolet absorber, resulting in the formation of a brittle film. The term "weight-average molecular weight" used herein denotes a value calculated using GPC (gel permeation chromatography) on the basis of styrene.

The above-described acrylic copolymer may be produced by copolymerizing a monomer mixture containing one or more monomer having an acid radical such as a carboxyl group and one or more another monomer which is polymerizable therewith.

Examples of monomers having an acid group are monocarboxylic acids such as acrylic acid and methacrylic acid, dicarboxylic acids such as maleic acid and itaconic acid and monoesters of these dicarboxylic acids. Among these, the most preferred are acrylic acid and methacrylic acid.

Typical examples of monomers which can be polymerized with monomers having an acid group are alkyl esters and aralkyl esters of acrylic acid and of methacrylic acid, and more specific examples are methyl(metha)acrylate, ethyl(metha)acrylate, propyl(metha)acrylate, n-butyl(metha)acrylate, isobutyl(metha)acrylate, t-butyl(metha)acrylate, 2-hexyl(metha)acrylate, stearyl(metha)acrylate, cyclohexyl(metha)acrylate, benzyl(metha)acrylate, phenyl(metha)acrylate, hydroxyethyl(metha)acrylate, hydroxypropyl(metha)acrylate, hydroxybutyl(metha)acrylate, 1,4-butanediolmono(metha)acrylate and dimethylaminoethyl(metha)acrylate.

The term "(metha)acrylate" used herein denotes both acrylate and methacrylate.

Styrene, α-methylstyrene, vinyltoluene, acrylonitrile, methacrylonitrile, vinyl acetate, vinyl propionate, acrylamide, methylolacrylamide and methlolmethacrylamide are also eligible as monomers which can be polymerized with a monomer having an acid group.

Although the above-exemplified monomers can be used for copolymerization with a monomer having an acid group, it is usual to use an acrylic monomer and a methacrylic monomer in combination. In the case where acrylic acid or methacrylic acid is used as a monomer having an acid group, the weight ratio of an acrylic monomer to a methacrylic monomer is preferably in the range of 1 : 0.1 to 1 :5, preferably 1 : 0.5 to 1 : 3.

Preferred methacrylic monomer is methyl methacrylate. It is particularly preferred that methyl methacrylate occupies 10 to 50 mass percent of a monomer mixture to be copolymerized. The monomer mixture to be copolymerized preferably contains (metha)acrylate having a hydroxyl group such as 2-hydroxyethyl(metha)acrylate, 3-hydroxypropyl(metha)acrylate and 4-hydroxybutyl(metha)acrylate in an amount of 0.2 to 5 moles per 1 kg of total monomer.

Preferred composition of the monomer mixture is the combination of acrylic alkylester, methyl methacrylate, methacrylic acid and 2-hydroxyethyl acrylate and the weight ratio of these monomers is within the range of 4 to 14 : 3 to 10 : 1 to 4 : 1 to 6.

The copolymerization of the monomer mixture may be carried out by any conventional method such as solution polymerization and suspension polymerization. Eligible polymerization initiators are azobisisobutyronitrile and benzoyl peroxide.

Another component forming the ultraviolet absorptive resin composition according to the present invention is a melamine compound. The melamine compound as used herein refers to a compound represented by formula (2) or (3) below

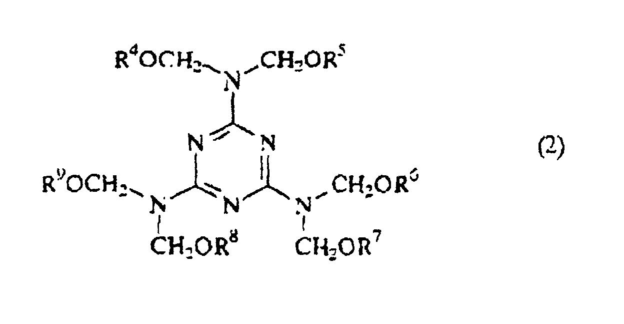

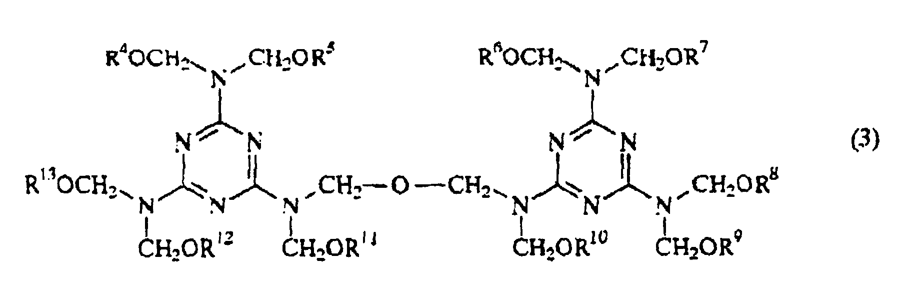

In formulae (2) and (3), R⁴ through R¹³ are each independently hydrogen or a C₁ - C₄ alkyl group. All of R⁴ through R¹³ are preferably alkyl groups, among which a methyl group is preferred.

A melamine compound of formula (3) is the dimer of a melamine compound of formula (2) and these compounds may be blended in a suitable ratio.

A blend ratio of the melamine compound to the acrylic copolymer is within the range of 30 to 80 parts by weight, preferably 40 to 65 parts by weight of the melamine compound per 100 parts by weight of the acrylic copolymer. Less than 30 parts by weight of the melamine compound would not provide so much effects obtained by addition thereof, while greater than 80 parts by weight of the melamine compound would invite cross-linking of itself, possibly leading to the formation of a fragile film.

The ultraviolet absorbing component of the resin composition of the present invention is a compound represented by formula (1) above. In formula (1), R¹ is hydrogen or chlorine but is preferably chlorine because of its ultraviolet absorptivity. R² is a C₁ - C₅ alkyl group. Preferred alkyl groups for R² are methyl, ethyl, isopropyl, t-butyl and t-amyl groups. R³ is a C₁ - C₁₂ alkyl group, preferably a C₆ - C₁₀ alkyl group.

One of the preferred compounds of formula (1) is a compound in which R¹ is chlorine, R² is t-butyl and R³ is octyl and the other is a compound in which R¹ is chlorine, R² is ethyl and R³ is n-hexyl.

The compound of formula (1) is blended in an amount of 2 to 15 parts by weight, preferably 5 to 10 parts by weight, based on 100 parts by weight of the acrylic copolymer. The compound of less than 3 parts by weight would fail to impart sufficient ultraviolet absorptivity to the resulting resin composition, while that of more than 15 parts by weight would cause reduced hardness or durability of the film of the resulting composition.

The inventive resin composition can be converted to a water-based coating by neutralizing with ammonia or an amine compound in an amount determined by the acid value of the acrylic copolymer, the nonvolatile fraction concentration of which water-based coating can be adjusted within the range of 5 to 40 percent by mass. An amine compound used for the neutralization may be an aliphatic amine or an alkylolamine. The aliphatic amine may be a primary, secondary or tertiary amine. Specific examples of amine compounds for the neutralization are triethylamine, octylamine, monoethanolamine and diisopropanolamine. The amount of an amine compound to be required for the neutralization is selected within the range of 0.6 to 1.0 chemical equivalent of the acid group of the acrylic copolymer.

The acrylic copolymer may be neutralized before or after being blended with the melamine compound and the compound of formula (1).

A solvent used for the preparation of a water-based coating may be a water-diluted hydrophilic organic solvent. Examples of hydrophilic organic solvents are diethylene glycol dimethyl ether, propylene glycol monomethyl ether, methyl Cellosolve, butyl Cellosolve and 3-methoxybutanol. The mix ratio of the hydrophilic organic solvent to water is selected from the range of 5 to 30 parts by weight of hydrophilic organic solvent per 100 parts by weight of water.

The coating prepared from the inventive resin composition may be applied over the surface of an article made from metal, glass or synthetic resin by any suitable method such as bar coating, dip coating, spin coating and roll coating and then cured by heating thereby forming a film having not only an ultraviolet screening ability but also strength and durability, over the article.

The coating prepared from the resin composition of the present invention can be used effectively to treat a glass or plastic container storing food or cosmetics, wind shields of automobiles or housings, light sources or covers thereof, lenses for glasses and optical lenses and various organic material as represented by woods, to be able to screen or shield ultraviolet rays.

An defoaming agent which is usually added to conventional resin coatings may be added the coating prepared from the inventive resin composition.

Furthermore, if necessary, a leveling agent and a surface slipping agent may be added for the purpose of adjusting the uniformity and slip properties of the film.

The invention will be further described by way of the following examples which are provided for illustrative purposes only.

The GPC measurement in each example was conducted under the following conditions:

| | |
|---|---|
| Solvent | tetrahydrofurane |
| Concentration | 1 mass % |
| Column | GMH6 x2 |
| Temperature | 23 °C |
| Flow rate | 1 ml/min |
| Injected sample | 150 µl |
| Detector | Refractometer |
| Calibration curve | polystyrene |

### Example 1

| | |
|---|---|
| Propyl acrylate | 500 g |
| Methyl methacrylate | 250 g |
| Methacrylic acid | 100 g |
| 2-hydroxyethyl acrylate | 150 g |
| azobisisobutyronitrile | 50 g |

The mixture of the above components was added dropwise to 2000 ml refluxed isopropanol over 3 hours and refluxed for another 3 hours thereby obtaining an acrylic copolymer having an acid value of 65.1 and a weight-average molecule weight of 16,000. 100 g of this copolymer and 50 g of a melamine compound of methylated full ether type were dissolved in 80 g of butyl Cellosolve. Added to this mixture were triethylamine in an amount corresponding to 0.8 chemical equivalent of the acid value of the copolymer and pure water in an amount of 320 g, followed by addition of 8 g of an ultraviolet absorber of the formula 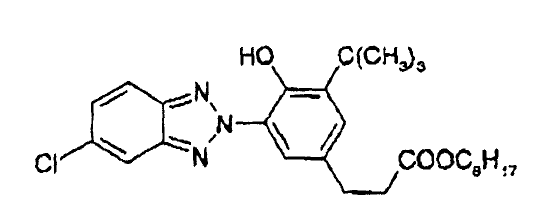 thereby obtaining homogeneous solution.

The solution was applied over the surface of a glass and cured by heating at 150 °C for 20 minutes thereby forming an ultraviolet shielding film having the following excellent properties:

| | |
|---|---|
| Pencil hardness | H |
| Adherence grid test | 100/100 |
| Ultraviolet permeability | 15.1% (wavelength 390 nm, film thickness 20 µm) |

### Example 2

| | |
|---|---|
| Butyl acrylate | 400 g |
| Methyl methacrylate | 250 g |
| Benzyl acrylate | 100 g |
| Methacrylic acid | 70 g |
| 2-hydroxyethyl acrylate | 230 g |
| Azobisisobutyronitrile | 80 g |

The mixture of the above components was added dropwise to 2000 ml refluxed isopropanol over 3 hours and refluxed for another 3 hours thereby obtaining an acrylic copolymer having an acid value of 45.6 and a weight-average molecule weight of 13,000. A homogeneous solution was prepared by following the procedure of Example 1 except for using this copolymer.

The solution was applied over the surface of a glass and cured by heating at 150 °C for 20 minutes thereby forming an ultraviolet shielding film having the following excellent properties:

| | |
|---|---|
| Pencil hardness | H |
| Adherence grid test | 100/100 |
| Ultraviolet permeability | 15.3% (wavelength 390 nm, film thickness 20 µm) |

### Example 3

| | |
|---|---|
| Acrylic acid | 100 g |
| Butyl acrylate | 200 g |
| 2-ethylhexyl acrylate | 300 g |
| Vinyl toluene | 200 g |
| Benzyl methacrylate | 200 g |
| Azobisisobutyronitrile | 10 g |

The mixture of the above components was added dropwise to 2,000 ml isopropanol maintained at 65 °C over 3 hours and then reacted at 65 °C for another 3 hours. The mixture was then heated to 85 °C over 1 hour and then reacted at 85 °C for 3 hours thereby obtaining an acrylic copolymer having an acid value of 77.9 and a weight average molecular weight of 175,000. 100 g of the resulting copolymer and 30 g of a melamine compound methylated full ether type were dissolved in 80 g of butyl Cellosolve. Added to this mixture was triethanolamine in an amount corresponding to 0.8 chemical equivalent of the acid value ere, followed by the addition of 8 g of an ultraviolet absorber of the formula

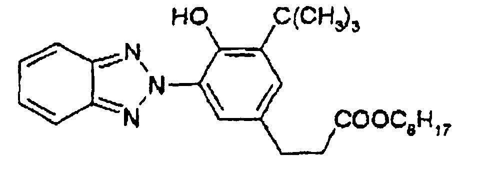

The mixture was stirred to obtain a homogeneous mixture, followed by the addition of 320 g of pure water thereby obtaining a solution.

The solution was applied over the surface of a glass and cured by heating at 130 °C for 30 minutes thereby forming an ultraviolet shielding film having the following excellent properties:

| | |
|---|---|
| Pencil hardness | HB |
| Adherence grid test | 100/100 |
| Ultraviolet permeability | 19.0% (wavelength 390 nm, film thickness 10 µm) |

### Example 4

| | |
|---|---|
| Acrylic acid | 80 g |
| N-butoxymethylacrylicamide | 200 g |
| 2-ethylhexyl acrylate | 320 g |
| Styrene | 200 g |
| 3-phenoxy-2-hydroxypropyl methacrylate | 200 g |
| Azobisisobutyronitrile | 10 g |

The mixture of the above components was added dropwise to the mixture of 500 g of isopropanol and 500 g of butyl Cellosolve over 2 hours and reacted at 70 °C for 3 hours. The mixture was then heated to 85 °C over 1 hour and then reacted at 85 °C for 3 hours thereby obtaining an acrylic copolymer having an acid value of 62.3 and a weight average molecular weight of 65,000. 100 g of the resulting copolymer and 50 g of a melamine compound methylated full ether type were added to and dissolved in 50 g of butyl Cellosolve and 50 g of isopropyl alcohol. Added to this mixture was N,N-dimethylethanolamine in an amount corresponding to 0.8 chemical equivalent of the acid value ere, followed by the addition of 10 g of an ultraviolet absorber of the formula

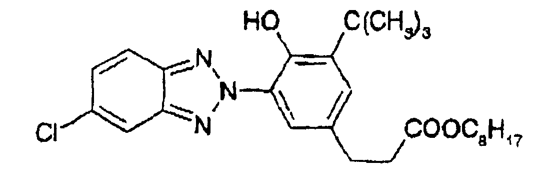

The mixture was stirred to obtain a homogeneous mixture, followed by the addition of 500 g of pure water thereby obtaining a solution.

The solution was applied over the surface of a glass and cured by heating at 160 °C for 20 minutes thereby forming an ultraviolet shielding film having the following excellent properties:

| | |
|---|---|
| Pencil hardness | FB |
| Adherence grid test | 100/100 |
| Ultraviolet permeability | 5.6% (wavelength 390 nm, film thickness 10 µm) |

### Comparative Example 1

| | |
|---|---|
| Butyl acrylate | 550 g |
| Methyl methacrylate | 20 g |
| Benzyl acrylate | 100 g |
| Acrylic acid | 70 g |
| 2-hydroxyethyl acrylate | 230 g |
| Azobisisobutyronitrile | 280 g |

The mixture of the above components was added dropwise to 2000 ml of refluxed isopropanol over 3 hours and refluxed for another 3 hours thereby obtaining an acrylic copolymer having an acid value of 45.6 and a weight-average molecule weight of 3,000. A homogeneous solution was prepared by following the procedure of Example 1 except for using this copolymer.

The solution was applied over the surface of a glass and cured by heating at 150 °C for 20 minutes thereby forming a film which was sufficient in an ultraviolet shielding ability but was too soft to be sufficient in hardness

| | |
|---|---|
| Pencil hardness | 3B |
| Adherence grid test | 100/100 |
| Ultraviolet permeability | 15.9% (wavelength 390 nm, film thickness 20 µm) |

### Comparative Example 2

| | |
|---|---|
| Butyl acrylate | 400 g |
| Methyl methacrylate | 200 g |
| Benzyl acrylate | 100 g |
| Methacrylic acid | 20 g |
| 2-hydroxyethyl acrylate | 80 g |
| Azobisisobutyronitrile | 10 g |

The mixture of the above components was added dropwise to 2000 ml of refluxed isopropanol over 3 hours and refluxed for another 3 hours thereby obtaining an acrylic copolymer having an acid value of 13.0 and a weight-average molecule weight of 24,000. An attempt was made to prepare a homogeneous solution by following the procedure of Example 1 except for using this copolymer. However, the ultraviolet absorber precipitated, resulted in failure of the preparation of a homogeneous solution.

## Claims

1. An ultraviolet absorptive resin composition which is obtained by blending 100 weight part of an acrylic copolymer having an acid value of 20 to 200 KOHmg/g and a weight-average molecular weight of 4,000 to 200,000, 30 to 80 weight part of a melamine compound and 3 to 15 weight part of a compound represented by the formula 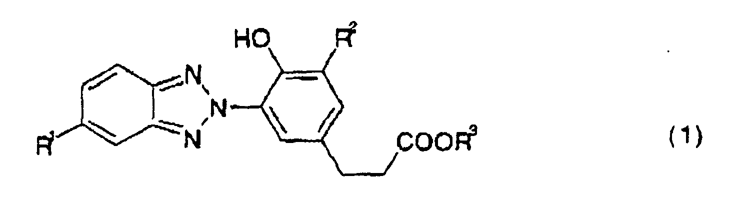 wherein R¹ is hydrogen or chlorine, R² is a C₁ - C₆ alkyl group and R³ is a C₁ - C₁₂ alkyl group.

2. The ultraviolet absorptive resin composition according to claim 1, wherein said acrylic copolymer having an acid value of 30 to 150 KOHmg/g and a weight-average molecular weight of 6,000 to 100,000.

3. The ultraviolet absorptive resin composition according to claim 1, said melamine compound is a compound represented by formula (2) or (3) 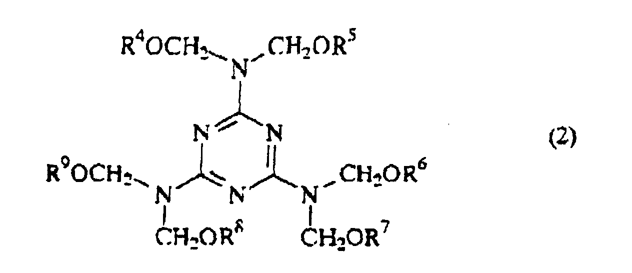 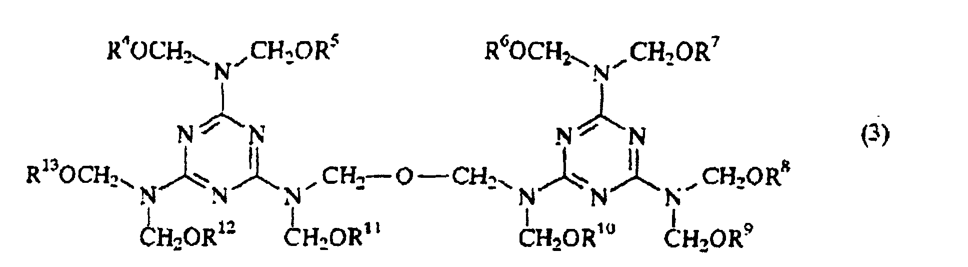 wherein R⁴ through R¹³ are each independently hydrogen or a C₁ - C₄ alkyl group.

4. The ultraviolet absorptive resin composition according to claim 1, said ultraviolet absorber is a compound represented by formula (1) in which R¹ is chlorine, R² is t-butyl and R³ is octyl.

5. The ultraviolet absorptive resin composition according to claim 1, said ultraviolet absorber is a compound represented by formula (1) in which R¹ is chlorine, R² is ethyl and R³ is n-hexyl.

6. A water-based coating which is obtained by neutralizing the resin composition of claim 1 with ammonia or an amine compound.

## Patentansprüche

1. Ultraviolett-absorbierende Harzzusammensetzung, die erhalten wird durch Mischen von 100 Gewichtsteilen eines acrylischen Copolymers mit einer Säurezahl von 20 bis 200 mg KOH/g und einer massegemittelten Molekülmasse von 4000 bis 200000, 30 bis 80 Gewichtsteilen einer Melamin-Verbindung und 3 bis 15 Gewichtsteilen einer Verbindung, angegeben durch die Formel 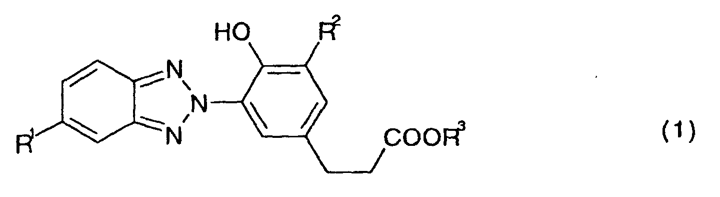 worin R¹ Wasserstoff oder Chlor ist, R² eine C₁-C₅-Alkylgruppe ist und R³ eine C₁-C₁₂-Alkylgruppe ist.

2. Ultraviolett-absorbierende Harzzusammensetzung nach Anspruch 1, wobei das acrylische Copolymer eine Säurezahl von 30 bis 150 mg KOH/g und eine massegemittelte Molekülmasse von 6000 bis 100000 aufweist.

3. Ultraviolett-absorbierende Harzzusammensetzung nach Anspruch 1, wobei die Melamin-Verbindung eine Verbindung ist, die durch Formel (2) oder (3) angegeben wird, 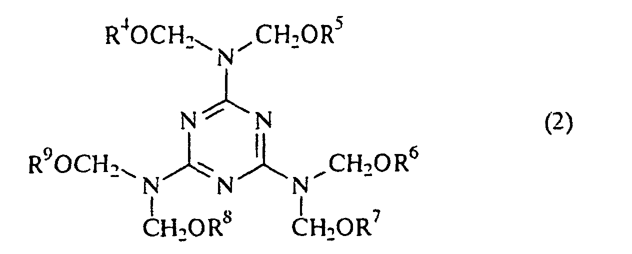 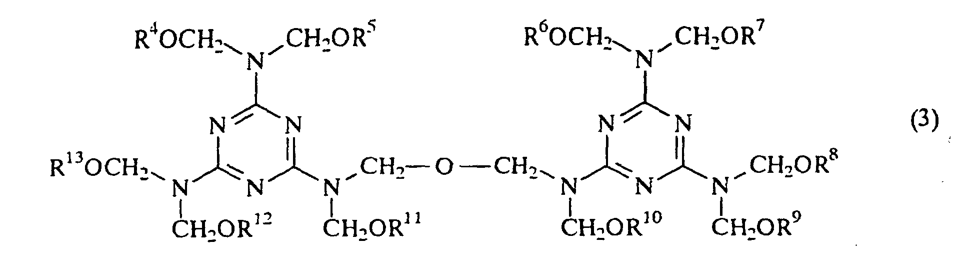 wobei R⁴ bis R¹³ jeweils unabhängig voneinander Wasserstoff oder eine C₁-C₄-Alkylgruppe sind.

4. Ultraviolett-absorbierende Harzzusammensetzung nach Anspruch 1, wobei die Ultraviolett-absorbierende Substanz eine Verbindung ist, die durch die Formel (1), in welcher R¹ Chlor ist, R² tert.-Butyl ist und R³ Octyl ist, angegeben wird.

5. Ultraviolett-absorbierende Harzzusammensetzung nach Anspruch 1, wobei die Ultraviolett-absorbierende Substanz eine Verbindung ist, die durch die Formel (1), in welcher R¹ Chlor ist, R² Ethyl ist und R³ n-Hexyl ist, angegeben wird.

6. Überzugsmasse auf Wasserbasis, die durch Neutralisieren der Harzzusammensetzung von Anspruch 1 mit Ammoniak oder einer Aminverbindung erhalten wird.

## Revendications

1. Composition de résine absorbant le rayonnement ultraviolet obtenu en mélangeant 100 parties en poids d'un copolymère acrylique ayant un indice d'acide de 20 à 200 KOH mg/g et une masse moléculaire moyenne de 4000 à 200 000, 30 à 80 parties en poids d'un composé mélamine et 3 à 15 parties en poids d'un composé représenté par la formule : 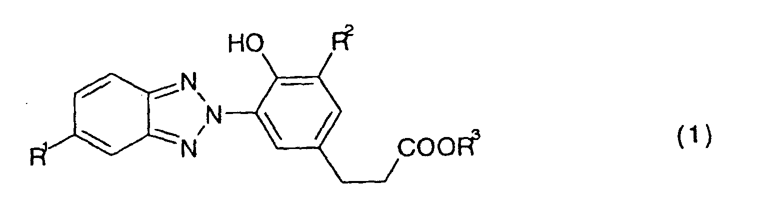 dans laquelle R¹ est l'hydrogène ou le chlore, R² est un groupe alkyle en C1-C5 et R³ est un groupe alkyle en C1-C12.

2. Composition de résine absorbant le rayonnement ultraviolet selon la revendication 1, dans laquelle ledit copolymère acrylique a un indice d'acide de 30 à 150 KOH mg/g et une masse moléculaire moyenne de 6000 à 100000.

3. Composition de résine absorbant le rayonnement ultraviolet selon la revendication 1, ledit composé métamine étant un composé représenté par la formule (2) ou (3) : 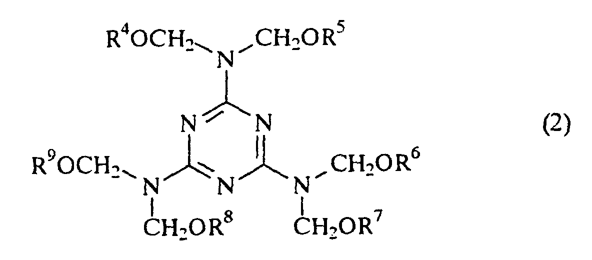 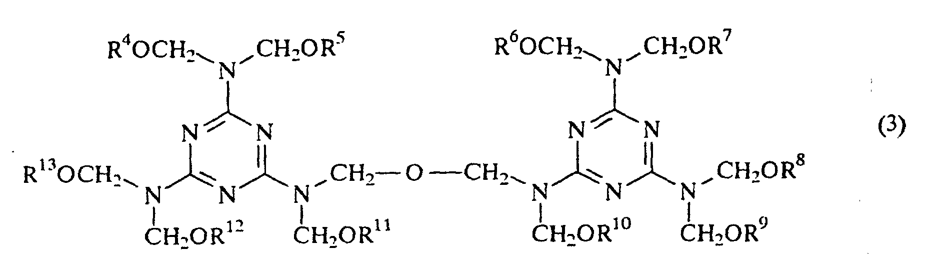 dans laquelle R⁴ à R¹³ sont chacun indépendamment l'hydrogène ou un groupe alkyle en C1-C4.

4. Composition de résine absorbant le rayonnement ultraviolet selon la revendication 1, ledit absorbant de rayonnement ultraviolet étant un composé représenté par la formule (1) dans laquelle R¹ est le chlore, R² est le t-butyle et R³ est l'octyle.

5. Composition de résine absorbant le rayonnement ultraviolet selon la revendication 1, ledit absorbant de rayonnement ultraviolet étant un composé représenté par la formule (1) dans laquelle R¹ est le chlore, R² est l'éthyle et R³ est le n-hexyle.

6. Revêtement à base d'eau obtenu en neutralisant la composition de résine selon la revendication 1 avec de l'ammoniaque ou un composé amine.
